# EUROPEAN PATENT APPLICATION

(11) **EP 1 700 896 A1**
(43) Date of publication of application: **13.09.2006**
(21) Application number: 04819383.3
(22) Date of filing: 25.11.2004
(51) Int. Cl.: C09J 201/00, C09J 11/06, H01L 21/68

(54) **HOT MELT ADHESIVE COMPOSITION**

(30) Priority: 27.11.2003 JP 2003397871
(71) Applicant: JSR Corporation, Tokyo 104-0045 (JP)
(72) Inventor: YASUDA, Kyouyu; c/o JSR CORPORATION,, Tokyo;1040045 (JP); ITOU, Nobuyuki; c/o JSR CORPORATION,, Tokyo;1040045 (JP); YOKOYAMA, Yasuaki Deceased, (JP)
(74) Representative: TBK-Patent
(86) International application number: PCT/JP2004/017449
(87) International publication number: WO 2005/052085

(57) **Abstract**

[Problem] To provide an adhesive composition which is used for fixing a semiconductor wafer or the like onto a substrate, exhibits firm adhesion with high heat resistance in the wafer grinding stage and is melted by heating to enable easy peeling after the completion of the wafer grinding stage. [Means to solve problem] The hot-melt adhesive composition of the invention is a composition containing as a main component a crystalline compound having a melting temperature of 50 to 300°C, and has a melting temperature width of not more than 30°C and a melt viscosity of not more than 0.1 Pa·s. The crystalline compound as a main component is desired to be an organic compound composed of elements of C, H and O only and having a molecular weight of not more than 1000, preferably an aliphatic compound or an alicyclic compound, particularly preferably a compound having a steroid skeleton and/or a hydroxyl group.

## Description

### TECHNICAL FIELD

The present invention relates to an adhesive composition used for fixing a semiconductor wafer onto a substrate in the processing of the wafer. More particularly, the invention relates to an adhesive composition which exhibits satisfactory adhesion at a processing temperature in the wafer processing stage, enables easy peeling of the wafer from the substrate after the processing of the wafer and can be easily removed when it has stuck and remain on the wafer after the processing.

### BACKGROUND ART

In the manufacturing process of semiconductor devices, a great number of lattice-like circuits such as IC and LSI are formed on a surface of a semiconductor wafer that is in a substantially disc form, and each region where the circuit has been formed is subjected to dicing along the given cutting lines to manufacture an individual semiconductor device. In the manufacture of the semiconductor device in this manner, it is desirable to make the thickness of the semiconductor device as small as possible in order to not only allow the semiconductor device to have favorable heat dissipation but also realize downsizing and low cost of mobile equipment such as cell-phones. On this account, a grinding step wherein a back surface of the semiconductor wafer is ground to a given thickness is taken before the semiconductor wafer is divided into individual devices. In this grinding step, the semiconductor device needs to be firmly fixed onto a substrate such as a table of a grinding machine with an adhesive for temporary bonding, but the wafer needs to be peeled from the substrate after the grinding is completed.

As such a temporary adhesive for the semiconductor wafer, waxes have been heretofore widely employed, and various waxes have been proposed. For example, in Japanese Patent Laid-Open Publication No. 224270/1995 (patent document 1), a wax containing as active ingredients polyglycerols having a HLB value of 7 to 13 is disclosed, and in Japanese Patent Laid-Open Publication No. 157628/1997 (patent document 2), a wax containing one or more substances selected from a rosin resin having an acid value of not less than 100, derivatives of the rosin resin, modified products of the rosin resin and a styrene/acrylic copolymer is disclosed.

Such conventional waxes, however, have low heat resistance, so that there are various problems. For example, the bond strength cannot be retained at the processing temperature in the wafer grinding step, the in-plane dispersion accuracy of the thickness of the ground wafer is not satisfactory, when a thin-ground semiconductor wafer or semiconductor device is peeled, the wafer or the device is liable to be broken because of bad releasability, if bubbles remain on the bonded surface, irregularities are produced on the back surface of the wafer, and if grinding is carried out in this state, the wafer is liable to be broken.

Patent document 1: Japanese Patent Laid-Open Publication No. 224270/1995

Patent document 2: Japanese Patent Laid-Open Publication No. 157628/1997

### DISCLOSURE OF THE INVENTION

### <PROBLEM TO BE SOLVED BY THE INVENTION>

It is an object of the present invention to provide an adhesive composition which is used for fixing a semiconductor wafer or the like onto a substrate, exhibits firm adhesion with high heat resistance in the wafer processing stage and enables easy peeling of the wafer from the substrate after the processing is completed.

### <MEANS TO SOLVE PROBLEM>

In order to solve the above problem, the present inventors have earnestly studied, and as a result, they have found that a hot-melt adhesive composition containing as a main component a crystalline organic compound having a melting temperature of 50 to 300°C has higher heat resistance than conventional waxes, exhibits firm adhesion at a processing temperature in the wafer processing stage and enables easy peeling of an adherend by heating the composition to a temperature of not less than the melting temperature after the processing of the adherend.

That is to say, the hot-melt adhesive composition of the invention contains as a main component a crystalline compound having a melting temperature of 50 to 300°C, and the composition has a melting temperature width of not more than 30°C, a melt viscosity of not more than 0.1 Pa·s at a melting temperature of the composition and adhesion strength of small temperature dependence.

The crystalline compound is desired to be an organic compound composed of elements of C, H and O only and having a molecular weight of not more than 1000, preferably an aliphatic compound or an alicyclic compound, particularly preferably a compound having a steroid skeleton and/or a hydroxyl group in a molecule or a derivative thereof (except an ester derivative). The ester derivative is undesirable by reasons that its melting point is low and there is a possibility that it becomes acid upon thermal decomposition and thereby corrodes the bonded surface.

The hot-melt adhesive composition preferably contains a surface tension modifier, specifically at least one substance selected from the group consisting of fluorine-based surface active agents having a fluorinated alkyl group and polyether alkyl-based surface active agents having an oxyalkyl group.

The hot-melt adhesive composition is preferably used in the form of a tablet.

### <EFFECT OF THE INVENTION>

According to the present invention, there is provided a hot-melt adhesive composition which is capable of firmly fixing a semiconductor wafer or the like onto a substrate when heated to molten and cooled and which enables easy peeling of the semiconductor wafer or the like from the substrate when heated to molten again.

In the case where the hot-melt adhesive composition of the invention is used, the adhesive component remaining on the surface of the wafer or the like after the wafer or the like is peeled from the substrate can be easily cleaned or removed.

Because of the above properties, the hot-melt adhesive composition of the invention can be favorably used as an adhesive for temporarily bonding a substrate in various processing stages necessary in scenes of the economical activities of the present day, for example, extremely thin grinding of semiconductor substrate and fine processing of surfaces of various materials.

### BRIEF DESCRIPTION OF THE DRAWING

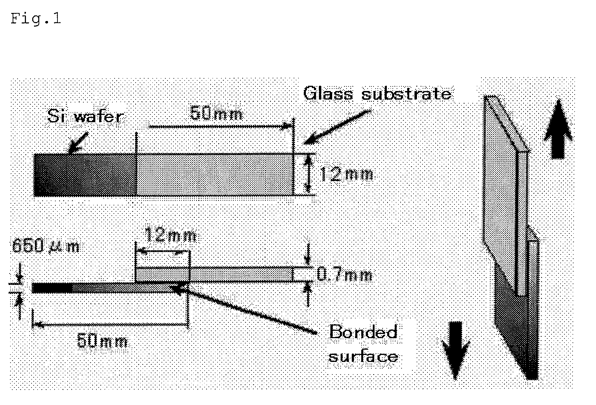

Fig. 1 is a group of schematic views showing a method for measuring a bond strength in working examples.

### BEST MODE FOR CARRYING OUT THE INVENTION

The hot-melt adhesive composition of the invention is described in detail hereinafter with priority given to use of the composition for temporarily bonding a semiconductor wafer. The hot-melt adhesive composition of the invention can be applied not only to uses for wafers but also to uses wherein planes, such as glass substrates, resin substrates, metal substrates, metal foils and plate elastomers (e.g., abrasive pads), are easily bonded to each other with a given gap and easily peeled from each other. The hot-melt adhesive in the invention means an adhesive which is a solid at ordinary temperature but which is melted by heating to allow an adherend to adhere and then cooled to enable bonding of the adherend and which is melted by heating again to enable peeling of the adherend. The peeling may be carried out by interposing a wedge or the like between the bonded surfaces.

The hot-melt adhesive composition of the invention contains as a main component a crystalline compound for imparting cohesive force to the composition, and the melting temperature of the crystalline compound is in the range of 50 to 300°C, preferably 55 to 250°C, more preferably 100 to 200°C. The term "melting temperature" used herein means a peak temperature in a main melting peak curve determined by a differential scanning calorimeter (DSC). When the melting temperature of the crystalline compound is in the above range, heat resistance of the composition in the bonding step can be enhanced.

The crystalline compound desirably has a molecular weight of not more than 1000, preferably 150 to 800, more preferably 200 to 600. If the molecular weight of the crystalline compound exceeds the upper limit of the above range, solubility of the crystalline compound in a solvent is lowered, and therefore, peeling and cleaning with a solvent sometimes become insufficient.

From the viewpoints that the crystalline compound should not do damage to wiring and an insulating film to be formed on the semiconductor wafer, should not become a source of contamination and should not cause modification of the adhesive in the melting of the adhesive, the crystalline compound is desirably a neutral compound having no active functional group such as a carboxylic acid group or an amino group, and is desirably a compound having been subjected to metal-freeing treatment until the total of contents of metals that diffuse into a medium to exert evil influence on the insulating properties, such as alkali metals (e.g., Na, K, Ca, Fe, Cu, Ni, Cr, Al), becomes not more than 100 ppm, preferably not more than 10 ppm. In the case where metals are contained in a stable state such as a state of a metal oxide, the total of the metal contents is not limited thereto.

Such a crystalline compound may be a nitro compound, such as 1,3,5-trinitrobenzene, 2,3,6-trinitrophenol or 2,4,5-trinitrotoluene, but from the viewpoints of high safety in handling, excellent heat resistance in the melting step and less coloring, preferable is an organic compound containing no N element and composed of elements of C, H and O only. Specifically, there can be mentioned aromatic compounds, aliphatic compounds and alicyclic compounds exemplified below.

Examples of the aromatic compounds include 9H-xanthene, benzofuran-3(2H)-one, 1,5-diphenyl-2,4-pentadiene-1-one, di-2-naphthyl ether, cis-1,8-terpinene, 2,3-dimethylnaphthalene, 1,2-napthalenediol, di-1-naphthylmethane, biphenyl-2,2'-diol, di-1-naphthyl ether, bis(diphenylmethyl) ether, 9,10-dihydroanthracene, 2,3,5,6-tetramethyl-p-benzoquinone, 2,6-dimethylnaphthalene, syringaldehyde, vanillyl alcohol, 1,3-diphenylisobenzofuran, 2,3'-dihydroxybenzophenone, isohydrobenzoin, 4,4'-dimethylbiphenyl, 1,3-naphthalenediol, 4-phenanthrol, 3,3-diphenylphthalide, pentamethylphenol, hexaethylbenzene, 3,4-dihydroxybenzophenone, 2,4-dihydroxybenzaldehyde, p-hydroxybenzophenone, 4,5,9,10-tetrahydropyrene, 2,3,4-trihydroxybenzophenone, hematoxylin, 2-isopropyl-5-methylhydroquinone, 1,9-diphenyl-1,3,6,8-nonatetraen-5-one, 9-phenylfluorene, 1,4,5-naphthalenetriol, 1-anthrol, 1,4-diphenyl-1,3-butadiene, galvinoxyl, pyrene, 9-phenylanthracene, triphenylmethanol, 1,1'-binaphthyl, m-xylene-2,4,6-triol, 4,4'-methylenediphenol, hexamethylbenzene, dibenzo-18-crown-6, diphenoquinone, biphenyl-4-ol, 1H-phenalene, 10-hydroxyanthrone, flavonol, benzoanthrone, 9H-xanthen-9-one, tetraphenylfuran, 2-methylanthraquinone, 4-hydroxy-1-naphthaldehyde, 1,7-naphthalenediol, 2,5-diethoxy-p-benzoquinone, curcumin, 2,2'-binaphthyl, 1,8-dihydroxyanthraquinone, 1,4-naphthalenediol, 1-hydroxyanthraquinone, 3,4-dihydroxyanthrone, p-terphenyl, 4,4'-dihydroxybenzophenone, anthracene, 2,4,6-trihydroxyacetophenone, 1,8-anthracenediol, tetraphenylethylene, 1,7-dihydroxy-9-xanthenone, 2,7-dimethylanthracene, epicatechin, naringenin, 2-anthrol, 1,5-naphthalenediol, benzylidenephthalide, 2-phenylnaphthalene, cis-decahydro-2-naphthol (cisoid), (2R,3R)-2,3-bis(diphenylphosphino)butane, trans-1,2-dibenzoylethylene, trans-1,4-diphenyl-2-butene-1,4-dione, bis(2-hydroxyethyl) terephthalate, fluoranthene, biphenylene, isovanillin, fluorene, 9-anthrol, p-phenylene diacetate, trans-stilbene, biphenyl-3,3'-diol, 2,5-dihydroxybenzophenone, pinol hydrate, benzoin, hydrobenzoin, 1,2-bis(diphenylphosphino)ethane, 2,4-dihydroxybenzophenone, 1,8-naphthalenediol, 1,2-naphthoquinone, 2,4'-dihydroxybenzophenone, 5-hydroxy-1,4-naphthoquinone, 1-phenanthrol, anthrone, 9-fluorenol, triphenylphosphine oxide, benzo[a]anthracene, 1,2-anthracenediol, 2,3-naphthalenediol, 2,4,6-trihydroxybenzophenone, di-2-naphthyl ketone, 3,3'-dihydroxybenzophenone, arbutin, 1,2,3,5-benzenetetraol, diphenylquinomethane, 2-phenanthrol, 2,3,4-trihydroxyacetophenone, capsanthin, 1,3,5-triphenylbenzene, 3,4,5-trihydroxybenzophenone, benzo[a]pyrene, triphenylmethyl peroxide, hexestrol, 1,1,2,2-tetraphenyl-1,2-ethanediol, 1,8-dihydroxy-3-methylanthraquinone, camphorquinone, 2,2',5,6'-tetrahydroxybenzophenone, esculin, 3,4'-dihydoxybenzophenone, 2,4,5-trihydroxyacetophenone, 9,10-phenanthrenequinone, 1,1,2,2-tetraphenylethane, rutin, (-)-hesperetin, 2,3',4,4',6-pentahydroxybenzophenone, 7-hydroxycoumarin, dl-hesperetin, ninhydrin, triptycene, fluorescin, chrysene, diethylstilbestrol, dibenzo[a,h]anthracene, pentacene, 1,6-dihydroxyanthraquinone, 3, 4', 5, 7-tetrahydroxyflavone, 2,6-anthracenediol and genistein.

Examples of the aliphatic compounds include ribitol, D-arabitol, furyl, γ-carotene, β-carotene, cantharidin, pentaerythritol, trans,trans-1,4-diacetoxybutadiene, D-glucitol, D-mannitol, idose, decanal, α-carotene, 2,4,6-trimethylfluoroglucinol, galactitol, equilin, equilenin, trans-1,2-cyclopentanediol, manool, 1-heptadecanol, 1-octadecanol, 1-eicosanol, dihydroxyacetone, γ-terpineol, 1-hexacosanol, 1-hentriacontanol and stearone.

Examples of the alicyclic compounds include coprostanol, zymosterol, ergocalciferol, β-sitosterol, lanosterol, 11-deoxycorticosterone, cholestanol, cholesterol, testosterone, ergosterol, stigmasterol, estradiol, corticosterone, epicholestanol, androsterone, 17α-hydroxy-11-deoxycorticosterone, gitoxigenin, epicoprostanol, calciferol, progesterone, dehydroepiandrosterone, 7-dehydrocholesterol, agnosterol, 11-dehydrocorticosterone, prednisolone, digitoxygenin, estrone, β-estradiol, cortisone, D-fructose (α form), D-lyxose (α form), D-lyxose (β form), isomaltose, D-talose (β form), D-talose (α form), D-allose (β form), D-mannose (β form), D-mannose (α form), D-xylose (α form), D-galactose (β form), L-fucose (α form), D-glucose (α form), 2-deoxy-D-glucose, maltotriose, D-altro-heptulose, L-arabinose (pyranose α form), D-arabinose, cafestol, L-arabinose (pyranose β form), D-galactose (α form), lycopene, aucubin, sucrose, friedelin, cis-1,3,5-cyclohexanetriol, D-inositol, lutein, diosgenin, tigogenin, zeaxanthin, myo-inositol, cellobiose, gibberellin A3, hematein, betulin, D-fructose (β form), D-altrose (β form), dibenzo-24-crown-8, methyl-D-glucopyranoside (β form), D-digitalose, salinomycin, methyl-D-galactopyranoside (α form), α,α-trehalose, bixin (total trans form), parathinose, trans-1,4-terpin, D-quinovose (α form), D-glycero-D-galacto-heptose, D-fucose (α form), D-glucose (β form), d-manno-heptulose, D-glycero-D-gluco-heptose, sophorose, sarsasapogenin, L-sorbose, D-altro-3-heptulose, twistane, (+)-borneol, inositol, (-)-isoborneol, L-arabinose (furanose form), L-galactose (α form), α-santonin, methyl-D-galactopyranoside (β form), cyclopentadecanone, δ-valerolactone, cis-2-methylcyclohexanol, and compounds represented by the following formulas (1) to (8).

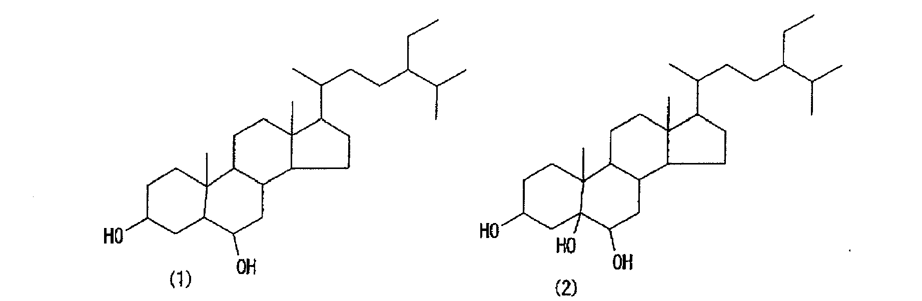

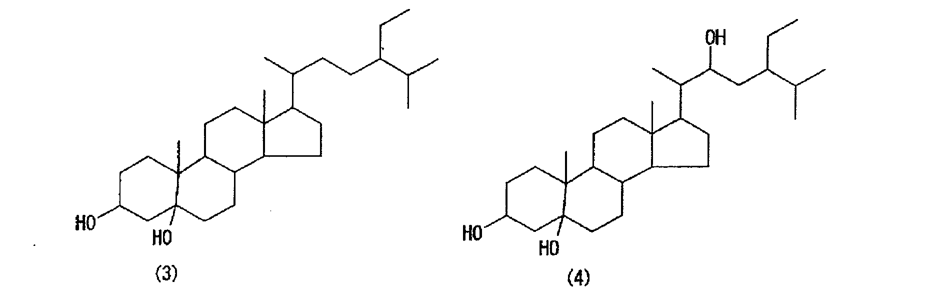

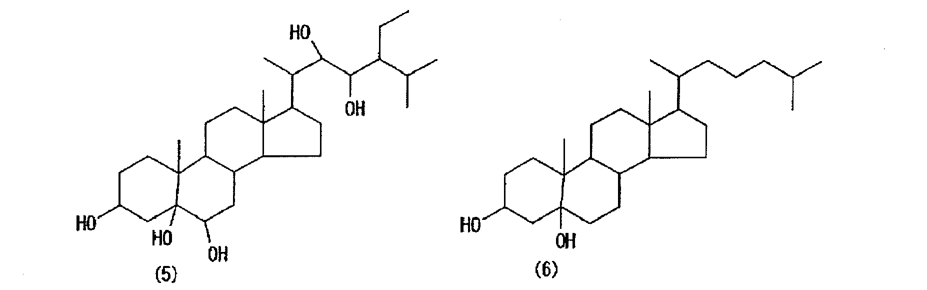

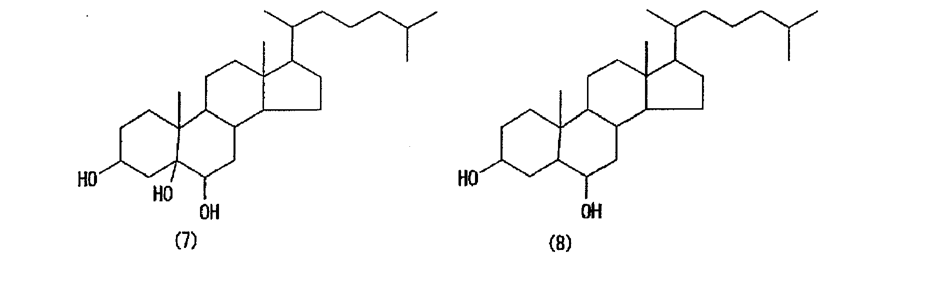

Of the above compounds, compounds having a steroid skeleton, such as cholesterol, coprostanol, zymosterol, ergocalciferol, β-sitosterol, lanosterol, 11-deoxycorticosterone, cholestanol, testosterone, ergosterol, stigmasterol, estradiol, corticosterone, epicholestanol, androsterone, 17a-hydroxy-11-deoxycorticosterone, gitoxigenin, epicoprostanol, calciferol, progesterone, dehydroepiandrosterone, 7-dehydrocholesterol, agnosterol, 11-dehydrocorticosterone, prednisolone, digitoxygenin, estrone, β-estradiol, cortisone and the compounds represented by the above formulas (1) to (8), and hydroxyl group-containing compounds or derivatives thereof, such as trans-1,2-cyclopentanediol, manool, 1-heptadecanol, 1-octadecanol, 1-eicosanol, γ-terpineol, 1-hexacosanol and 1-hentriacontanol, are particularly preferable from the viewpoint of tablet processability. However, ester derivates are undesirable by reasons that their melting points are low and there is a possibility that they become acid upon thermal decomposition and thereby corrode the bonded surface.

The above crystalline compounds may be used singly or as a mixture of two or more kinds. The crystalline compound is used in such an amount that the content of the crystalline compound in the adhesive composition becomes not less than 70% by weight, preferably not less than 80% by weight, particularly preferably not less than 90% by weight. If the content thereof is less than the lower limit of the above range, the melting temperature does not become sharp, and the melt viscosity sometimes becomes high.

The adhesive composition containing the crystalline compound as a main component has a melting temperature width of 1 to 30°C, preferably 1 to 20°C, particularly preferably 1 to 10°C, and a melt viscosity, at a melting temperature of the composition, of 0.0001 to 0.1 Pa·s, preferably 0.001 to 0.05 Pa·s, particularly preferably 0.001 to 0.01 Pa·s. The term "melting temperature width" used herein means a difference between a temperature at the starting point and a temperature at the end point in a main melting peak curve determined by a differential scanning calorimeter (DSC). By virtue of the melting temperature width and the melt viscosity in the above ranges, ease of peeling is enhanced, and therefore, an external force that is applied for peeling the wafer from the substrate can be decreased.

Since the melting temperature width and the melt viscosity of the composition greatly depend upon the melting temperature width and the melt viscosity of the crystalline compound, it is desirable to use a crystalline compound having a narrow melting temperature width and a low melt viscosity. That is to say, the crystalline compound used as a main component is preferably a compound having a melting temperature of 50 to 300°C, a melting temperature width of 1 to 30°C and a melt viscosity, at the melting temperature, of 0.0001 to 0.1 Pa·s.

To narrow the melting temperature width of the crystalline compound, to lower the melt viscosity thereof and to decrease the amount of free metal ions therein, it is preferable to carry out purification of the crystalline compound. Examples of methods for purifying the crystalline compound include:
(a) a method wherein the crystalline compound is dissolved in a solvent and then the solvent is gradually distilled off to perform recrystallization, whereby the purity of the crystalline compound is increased, and
(b) a method wherein the crystalline compound is dissolved in a solvent and then the solution is brought into contact with an ion-exchange resin to remove free metals, whereby the content of the free metals is lowered.

In order to control wettability of a substrate and/or adhesion to a substrate or in order to control melt viscosity of the hot-melt adhesive composition of the invention, a surface tension modifier such as a nonionic surface active agent can be added to the adhesive composition when needed, within limits not detrimental to the desired functions.

The nonionic surface active agent which can be added is, for example, a fluorine-based surface active agent having a fluorinated alkyl group such as a perfluoroalkyl group or a polyether alkyl-based surface active agent having an oxyalkyl group.

Examples of the fluorine-based surface active agents include C₉F₁₉CONHC₁₂H₂₅, C₈F₁₇SO₂NH-(C₂H₄O)₆H, "Eftop EF301", "Eftop EF303" and "Eftop EF352" (available from Shin-Akita Kasei Co., Ltd.), "Megafac F171" and "Megafac F173" (available from Dainippon Ink & Chemicals, Inc.), "Asahi Guard AG710" (available from Asahi Glass Co., Ltd.), "Fluorade FC-170C", "Fluorade FC430" and "Fluorade FC431" (available from Sumitomo 3M Ltd., Japan), "Surflon S-382", "Surflon SC-101", "Surflon SC-102", "Surflon SC-103", "Surflon SC-104", "Surflon SC-105" and "Surflon SC-106" (available from Asahi Glass Co., Ltd.), "BM-1000" and "BM-1100" (available from B.M-Chemie), "Schsego-Fluor" (available from Schwegmann), and "FS1265" (available from Dow Corning Toray Silicon Co., Ltd.).

Examples of the polyether alkyl-based surface active agents include polyoxyethylene alkyl ether, polyoxyethylene allyl ether, polyoxyethylene alkylphenyl ether, polyoxyethylene fatty acid ester, sorbitan fatty acid ester, polyoxyethylene sorbitan fatty acid ester and oxyethylene/oxypropylene block polymer. More specifically, there can be mentioned "Emalgen 105", "Emalgen 430", "Emalgen 810", "Emalgen 920", "Reodol SP-40S", "Reodol TW-L120", "Emanol 3199", "Emanol 4110", "Excel P-40S", "Bridge 30", "Bridge 52", "Bridge 72", "Bridge 92", "Arassel 20", "Emasol 320" "Tween 20", "Tween 60" and "Merge 45" (available from Kao Corporation), "Noniball 55" (available from Sanyo Chemical Industries, Ltd.), and "SH-28PA", "SH-190", "SH-193", "SZ-6032" and "SF-8428" (available from Dow Corning Toray Silicon Co., Ltd.).

Examples of other nonionic surface active agents include polyoxyethylene fatty acid ester, polyoxyethylene sorbitan fatty acid ester and polyalkylene oxide block copolymer. More specifically, there can be mentioned "Chemistat 2500" (available from Sanyo Chemical Industries, Ltd.), "SN-EX9228" (available from San-Nopco Limited), and "Nonal 530" (available from Toho Chemical Industry Co., Ltd.).

The surface tension modifier can be used in an amount of 0.1 to 50 parts by weight, preferably 1 to 30 parts by weight, based on 100 parts by weight of the crystalline compound. If the amount used exceeds the upper limit of the above range, hardness of the adhesive at ordinary temperature becomes too low or viscosity thereof at ordinary temperature becomes too high, resulting in a problem of difficulty in the tablet preparation. If the amount used is less than the lower limit of the above range, the effect of improving wettability and/or adhesion is not exhibited occasionally.

In order to control a gap between substrates to be bonded, the hot-melt adhesive composition of the invention may contain fine particles having a narrow particle size distribution, for example, metal oxides, such as aluminum oxide, zirconium oxide, titanium oxide and silicon oxide, and polystyrene crosslinked particles (e.g., "Micropearl SPN" and "Micropearl SPS Series" available from Sekisui Chemical Co., Ltd.) in amounts of 0.1 to 10% by weight, preferably 0.1 to 5% by weight, based on the total amount of the composition, when needed. If the amounts of the fine particles exceed the upper limit of the above range, the fine particles hardly spread out on the adherend surface and are aggregated when the composition is melted, sometimes resulting in a problem that the gap between the substrates cannot be controlled. If the amounts thereof are less than the lower limit of the above range, the effect of controlling the gap is not exhibited occasionally.

The bond strength of the hot-melt adhesive composition of the invention is not less than 0.5 MPa, preferably not less than 1 MPa, particularly preferably not less than 5 MPa, at a temperature of 25±2°C. If the bond strength is less than the lower limit of the above range, the bonded surfaces partially peel off from each other depending upon the processing conditions after the bonding, and as a result, in-plane uniformity of the processing is sometimes impaired. In the case where the bond strength at 25±2°C that is given when a wafer and a glass substrate are bonded using the hot-melt adhesive composition of the invention is taken as A (MPa) and the bond strength at a temperature lower than the melting temperature of the composition by 20°C is taken as B (MPa), the bond strengths A and B satisfy the following relational expression (1), whereby the temperature dependence of the bond strength is small, and an excellent bonded state can be maintained in a wide temperature range of not more than the melting temperature.

0<A-B<0.5 ... (1)

The method for processing a semiconductor wafer using the hot-melt adhesive of the invention comprises a step of fixing the semiconductor wafer onto a substrate, a step of processing the semiconductor wafer fixed onto the substrate, a step of peeling the processed semiconductor wafer from the substrate, and a step of cleaning the peeled semiconductor wafer.

In the step of fixing the semiconductor wafer onto a substrate, the hot-melt adhesive composition of the invention is applied to a surface of the semiconductor wafer having been subjected to surface treatment when needed or to a surface of the substrate, and the semiconductor wafer and the substrate were laminated and then cooled, whereby the semiconductor wafer can be fixed onto the substrate.

In the application of the hot-melt adhesive composition of the invention to the semiconductor wafer or the like, the wafer surface is preferably subjected to hydrophobicity-imparting treatment in advance in order to allow the molten adhesive composition to uniformly spread out on the surface of the wafer or the like.

The hydrophobicity-imparting treatment method is, for example, a method of previously applying a surface treatment agent to a wafer surface. Examples of the surface treatment agents include coupling agents, such as 3-aminopropyltrimethoxysilane, 3-aminopropyltriethoxysilane, 2-aminopropyltrimethoxysilane, 2-aminopropyltriethoxysilane, N-(2-aminoethyl)-3-aminopropyltrimethoxysilane, N-(aminoethyl)-3-aminopropylmethyldimethoxysilane, 3-ureidopropyltrimethoxysilane, 3-ureidopropyltriethoxysilane, N-ethoxycarbonyl-3-aminopropyltrimethoxysilane, N-ethoxycarbonyl-3-aminopropyltriethoxysilane, N-triethoxysilylpropyltriethylenetriamine, N-trimethoxysilylpropyltriethylenetriamine, 10-trimethoxysilyl-1,4,7-triazadecane, 10-triethoxysilyl-1,4,7-triazadecane, 9-trimethoxysilyl-3,6-diazanonyl acetate, 9-triethoxysilyl-3,6-diazanonyl acetate, N-benzyl-3-aminopropyltrimethoxysilane, N-benzyl-3-aminopropyltriethoxysilane, N-phenyl-3-aminopropyltrimethoxysilane, N-phenyl-3-aminopropyltriethoxysilane, N-bis(oxyethylene)-3-aminopropyltrimethoxysilane, N-bis(oxyethylene)-3-aminopropyltriethoxysilane and hexamethyldisilazine.

Examples of methods for applying the hot-melt adhesive composition of the invention include:
(1) a method wherein the adhesive composition is dissolved in an appropriate solvent to give a solution, then the solution is applied onto a substrate in an amount corresponding to a given film thickness, and the solvent is distilled off,
(2) a method wherein the adhesive composition is melted, and the molten composition is applied onto a substrate in a given amount,
(3) a method wherein the adhesive composition is applied onto a PET film having been subjected to release treatment, in a given thickness to form a film, and then the film is transferred onto a substrate by laminating, and
(4) a method wherein the adhesive composition of a given amount is molded into a tablet, and the tablet is melted on a substrate, followed by casting.

Of the above methods, the tablet method (4), which causes no adhesive splashing when the composition is used and is a simple and easy method, is preferable taking it into consideration that the adhesive composition of the invention is used mainly in the processing of a semiconductor wafer.

The solvent for dissolving the adhesive composition, which is used in the method (1), is not specifically restricted provided that it can dissolve the adhesive composition. Examples of the solvents used include:
alcohols, such as isopropanol, butanol, hexanol, ethanol, methanol, ethylene glycol, diethylene glycol, propylene glycol, dipropylene glycol and phenol;
hydrocarbon solvents, such as n-pentane, cyclopentane, n-hexane, cyclohexane, n-heptane, cycloheptane, n-octane, cyclooctane, n-decane, cyclodecane, hydrogenated dicyclopentadiene, benzene, toluene, xylene, durene, indene, decalin, tetralin, tetrahydronaphthalene, decahydronaphthalene, squalane, ethylbenzene, t-butylbenzene and trimethylbenzene;
ketones, such as acetone, methyl ethyl ketone, methyl isobutyl ketone, cyclopentanone and cyclohexanone;
ethers, such as ethyl ether, ethylene glycol dimethyl ether, ethylene glycol diethyl ether, diethylene glycol dimethyl ether, diethylene glycol diethyl ether, tetrahydrofuran and dioxane;
esters, such as ethyl acetate, butyl acetate, ethyl butyrate, ethylene glycol monomethyl ether acetate, ethylene glycol monoethyl ether acetate, ethylene glycol monoacetate, diethylene glycol monomethyl ether acetate, diethylene glycol monoethyl ether acetate, propylene glycol monomethyl ether acetate, propylene glycol monoethyl ether acetate, dipropylene glycol monomethyl ether acetate and dipropylene glycol monoethyl ether acetate; and
polar solvents, such as dimethylformamide, dimethylacetamide, N-methylpyrrolidone, hexamethylphosphoramide, dimethyl sulfoxide, γ-butyrolactone, chloroform and methylene chloride.

Of the above solvents, preferable are isopropanol, ethanol, methanol, acetone, methyl ethyl ketone and tetrahydrofuran. The above solvents may be used singly or as a mixture of two or more kinds. The solvent can be used also as a cleaning liquid for washing out the adhesive sticking to the substrate after the peeling.

In order to mold the adhesive composition of the invention into a tablet, hitherto known methods, such as injection molding, mold method, tablet making, casting and film cutting, are employable. There is no specific limitation on the shape of the tablet, and for example, shapes of cylinder; polygonal prisms such as triangular prism, tetragonal prism, pentagonal prism and hexagonal prism; circular cone; polygonal pyramids such as triangular pyramid, tetragonal pyramid, pentagonal pyramid and hexagonal pyramid; football; polyhedrons such as cube; sphere; and grain are available. Of these shapes, preferable are shapes of cylinder and polygonal prisms because the gap between the surfaces of the wafer and the substrate to be fixed can be kept horizontal, and particularly preferable is a shape of cylinder taking ease of tablet preparation into consideration. The size of the tablet is not specifically restricted provided that it can be practically used, but if a large number of small tablets are used for bonding, it is necessary to pay attention to deaeration of bubbles remaining on the adhesive layer. Therefore, it is preferable to use a small number of tablets corresponding to the thickness of the adhesive layer.

For applying the adhesive composition of the invention in the form of a tablet onto a wafer or the like in the aforesaid method (4) (tablet method), the adhesive composition is heated at "a melting temperature of the composition + 2°C" to "a melting temperature of the composition + 50°C", preferably "a melting temperature of the composition + 2°C" to "a melting temperature of the composition + 30°C", particularly preferably "a melting temperature of the composition + 5°C" to "a melting temperature of the composition + 20°C". If the heating temperature is lower than the lower limit of the above range, spreading of the adhesive on the adherend surface is insufficient to sometimes cause nonuniform bonding. If the heating temperature is higher than the upper limit of the above range, evaporation or decomposition of the adhesive partially proceeds, and desired bond properties are not obtained occasionally.

The amount of the hot-melt adhesive composition of the invention applied can be arbitrarily selected according to the size of the bond area of the wafer used and the bond properties required for the wafer processing, but it is desirable to apply the composition in such an amount that the thickness of the adhesive layer becomes 0.01 µm to 2 mm, preferably 0.05 µm to 1mm, more preferably 0.1 µm to 0.5 mm. If the thickness of the adhesive layer is smaller than the lower limit of the above range, the wafer or the like is not sufficiently bonded occasionally. If the thickness is larger than the upper limit of the above range, bond strength is lowered to sometimes cause peeling from the bonded surface or material breakage of the adhesive. The thickness of the adhesive layer can be controlled by the amount of the adhesive and a pressure applied for laminating.

Examples of methods for laminating a wafer and a substrate include:
(i) a method wherein the adhesive composition is applied onto one of the wafer and the substrate or both of them and they are laminated, and
(ii) a method wherein the adhesive composition in the form of a tablet is interposed between the wafer and the substrate and the adhesive composition in this state is melted by heating to thereby laminate the wafer and the substrate. In the method (ii), it is preferable to carry out melting under reduced pressure of not more than 200 Torr, in order to remove bubbles in the adhesive layer and thereby make the thickness of the adhesive layer constant.

The temperature for heating the hot-melt adhesive composition of the invention to molten is the same as the aforesaid melting temperature used in the application of the adhesive composition in the form of a tablet. Since the melting temperature width of the adhesive composition of the invention is narrow, it is necessary to accurately control the temperature of the wafer and the temperature of the substrate, and they are desirably controlled so that the temperature difference between them should be not more than 5°C, preferably not more than 3°C, particularly preferably not more than 2°C. If the temperature difference is larger than 5°C, the molten adhesive composition is solidified on the substrate to bring about bubbles, or the uniformity of the thickness of the adhesive layer between the laminated surfaces is impaired.

After the wafer and the substrate are laminated in the above manner, the adhesive composition is cooled to a temperature of not more than the melting temperature, preferably not more than "the melting temperature - 20°C", particularly preferably not more than "the melting temperature - 40°C", whereby the wafer and the substrate are firmly bonded.

The processing of the wafer having been fixed onto the substrate in the above manner is preferably carried out at a temperature lower than the melting temperature of the adhesive composition used.

After the processing of the wafer is carried out, the wafer is peeled from the substrate. In this peeling step, at least one of the wafer and the substrate is heated to a temperature of not less than the melting temperature of the adhesive composition used, whereby the wafer can be peeled from the wafer.

When the adhesive remains on the wafer surface after the peeling, it can be removed by cleaning the wafer with the aforesaid solvent used for dissolving the adhesive composition.

The cleaning method is, for example, a method of immersing the wafer in a cleaning liquid or a method of spraying a cleaning liquid onto the wafer. Although the temperature of the cleaning liquid is not specifically restricted, it is in the range of preferably 20 to 80°C, more preferably 30 to 50°C.

The hot-melt adhesive kit of the invention comprises the hot-melt adhesive composition in the form of a tablet, a surface treatment agent and a cleaning liquid, and can be used as a fixing agent for temporarily bonding a semiconductor wafer or the like to a substrate.

### EXAMPLES

The present invention is further described with reference to the following examples, but it should be construed that the invention is in no way limited to those examples.

Prior to use of a crystalline compound in the following examples, the crystalline compound in the form of a THF solution was mixed and stirred with 20 parts by weight of an ion-exchange resin for 10 hours to perform deionization, and it was confirmed that the contents of Na, K, Ca, Fe, Cu, Ni, Cr and Al metals were each 1 ppm. Measurements of melting temperature, melting temperature width, melt viscosity and bond strength were carried out in the following manner.

### <Melting temperature and melting temperature width>

Using a differential scanning calorimeter ("RDC220" manufactured by Seiko Instruments Inc.), a melting peak curve was determined in air at a rate of 2°C/min. A peak temperature in a main melting peak curve was taken as a melting temperature, and a difference of temperature between the starting point and the end point of the melting peak curve was taken as a melting temperature width.

### <Melt viscosity>

The melt viscosity was measured at a melting temperature using an E type viscometer (manufactured by Toki Sangyo Co., Ltd.).

### <Bond strength>

A test specimen shown in Fig. 1 was prepared. The ends of the specimen placed vertically were grasped and pulled upward and downward respectively under a fixed load. When substrates were peeled from each other, a tensile shear strength was measured, and the measured value was taken as a bond strength. The measurement was carried out at a pulling rate of 1.67×10⁻⁴ m/s and at a given temperature using a Tensilon type tension tester. In Fig. 1, the left-hand side upper view is a view of a test specimen for the measurement of bond strength seen from the above, and the left-hand side lower view is a view of the specimen seen from the side.

### (Example 1)

Into a cylindrical pressure molding machine having a diameter of 10 mm, 0.354 g of cholesterol (molecular weight: 386.7, melting temperature: 150°C, melting temperature width: 1°C, melt viscosity: 2 mPa·s) was weighed, and a pressure of 200 kg·cm⁻² was applied for 3 minutes to obtain a cylindrical tablet having a diameter of 10 mm and a thickness of 5.5 mm.

The resulting tablet was placed on a 6-inch silicon wafer (thickness: 650 mm), then a square glass substrate having a thickness of 0.7 mm and a side length of 20 cm was placed on the tablet, and they were placed in a vacuum oven and heated to 150°C at 10 Torr. As the 6-inch silicon wafer to be bonded, a wafer whose surface had been subjected to hydrophobicity-imparting treatment consisting of spin coating with a 5% isopropyl alcohol solution of hexamethyldisilazane and drying was used. The tablet was melted at a wafer temperature of about 148°C. At this time, vacuum drawing was terminated, and the cholesterol having been melted under reduced pressure was subjected to deaeration for 2 minutes. Thereafter, the cholesterol was heated to molten at a rate of 1°C/min, and as a result, the cholesterol spread out all over the 6-inch silicone wafer surface. Immediately after the laminated sample was taken out of the vacuum oven, the cholesterol was crystallized, and the substrates were firmly bonded. The bond strength was 5.0 MPa (25°C), and it was a sufficient strength for grinding. A difference between the bond strength at 25°C and the bond strength at 130°C was 0.2 MPa.

Subsequently, the back surface of the wafer laminated to the glass substrate was subjected to grinding using a commercially available grinding apparatus. At this time, the temperature of the wafer reached 60°C, but the wafer did not peel off. After the grinding, the laminated sample was placed on a hot plate heated to 160°C in such a manner that the glass substrate faced the hot plate, to melt the cholesterol again, and as a result, the ground wafer could be easily peeled from the glass substrate.

Then, the ground wafer thus peeled was immersed in isopropyl alcohol at 40°C for 1 minute and thereby cleaned. The peel surface of the wafer was observed by reflection type FT-IR. As a result, absorption assigned to an organic compound was not observed at all, and this revealed that the adhesive used for laminating had been removed by the cleaning. Further, the thickness of the 6-inch silicon wafer was measured, and as a result, the thickness was 30 µm though the thickness before grinding was 650 µm, and a dispersion of the in-plane thickness was ±0.5 µm. This revealed that the wafer had been favorably ground.

### (Example 2)

An aluminum substrate was laminated onto a glass substrate in the same manner as in Example 1, except that a 6-inch aluminum substrate (thickness: 3 mm) whose surface to be laminated had been partially provided with a fine wiring pattern of 10 µmL/S and 5 µm depth was used instead of the 6-inch silicon wafer, a mixture (melting temperature: 157°C, melting temperature width: 1°C, melt viscosity: 1 mPa·s) of 0.5 g of ergosterol (molecular weight: 396.7, melting point: 157°C), 0.05 g of a surface active agent "SF-8428" (available from Dow Corning Toray Silicon Co., Ltd.) and 0.03 g of silicon dioxide fine particles (available from Shionogi & Co., Ltd., mean particle diameter: 2 µm) was used instead of cholesterol, and the heating temperature of the vacuum oven was changed to 160°C. The bond strength was 4.6 MPa (25°C), and a difference between the bond strength at 25°C and the bond strength at 137°C was 0.2 MPa. The tensile shear strength of the sample (laminate of aluminum substrate and glass substrate, test specimen of the same shape as that for measuring bond strength) was 4.0 MPa (25°C), and it was a sufficient strength for grinding.

The wiring pattern of the aluminum substrate was observed under a microscope from the glass substrate surface. As a result, the adhesive proved to have uniformly penetrated into trenches of the pattern, and no bubble was observed.

After the aluminum substrate was ground, it was peeled and cleaned in the same manner as in Example 1. The peel surface of the 6-inch aluminum substrate was observed by reflection type FT-IR. As a result, absorption assigned to an organic compound was not observed at all, and this revealed that the adhesive used for laminating had been removed by the cleaning. Further, the thickness of the 6-inch aluminum substrate was measured, and as a result, the thickness was 2.5 mm though the thickness before grinding was 3 mm, and a dispersion of the in-plane thickness was ±0.01 mm. This revealed that the aluminum substrate had been favorably ground.

### (Example 3)

A copper foil (roughened side) was laminated onto a glass substrate in the same manner as in Example 1, except that a square electrodeposited copper foil (thickness: 25 µm) having a side length of 13 cm was used instead of the 6-inch silicon wafer. Then, the shiny side of the copper foil was coated with an insulating film varnish "WPR-1020" (available from JSR Corporation) in a thickness of 2 µm by spin coating, and the varnish was dried at 140°C for 1 hour to form an insulating film. A dispersion of the thickness of the insulating film was measured. As a result, a mean film thickness was 2.05 µm, and the dispersion was 0.02 µm. This dispersion was equivalent to that in the case of formation of an insulating film on a usual silicon wafer by spin coating, and it was found that lamination between the glass substrate and the copper foil had been uniformly carried out. Further, even in the drying step at 140°C to form an insulating film, the copper foil did not peel off from the glass substrate, and the bond strength was retained even at 140°C.

### (Example 4)

Into a Teflon (registered trademark) container having a diameter of 10 mm and a depth of 10 mm, 0.654 g of stearyl alcohol (molecular weight: 270.5, melting temperature: 58°C, melting temperature width: 1°C, melt viscosity: 1 mPa·s) was weighed, and the stearyl alcohol was melted in an oven at 80°C and then solidified by cooling, to obtain a cylindrical tablet having a diameter of 10 mm and a thickness of 7 mm.

The resulting tablet was placed on a SUS plate (thickness: 50 cm), and the SUS plate was heated to 60°C to melt the tablet. A sample (5x5cm square) having been cut out from a CMP abrasive pad "suba800" (available from Rodel Nitta Company) and heated to 60°C in an oven in advance was placed on the molten tablet. The CMP abrasive pad was pressed against the SUS plate until the gap between the bonded surface of the CMP abrasive pad and the SUS plate became 30 µm, followed by cooling to bond them. The bond strength was 5.0 MPa (25°C), and a difference between the bond strength at 25°C and the bond strength at 38°C was 0.05 MPa. The tensile shear strength of the sample (laminate of SUS plate and CMP abrasive pad) was 2.0 MPa (25°C), and it was a sufficient strength for grinding. When the SUS plate was heated to a temperature of not less than 60°C again, the CMP abrasive pad could be easily peeled.

### (Example 5)

Into a cylindrical pressure molding machine having a diameter of 10 mm, 0.354 g of a compound represented by the aforesaid formula (8) (molecular weight: 404.7, melting temperature: 223°C, melting temperature width: 4°C, melt viscosity: 4 mPa·s) was weighed, and a pressure of 200 kg·cm⁻² was applied for 3 minutes to obtain a cylindrical tablet having a diameter of 10 mm and a thickness of 5.5 mm.

The resulting tablet was placed on a 6-inch silicon wafer (thickness: 100 µm), then a 6-inch silicon wafer having a thickness of 650 µm was placed on the tablet, and they were placed in a vacuum oven and heated to 250°C at 10 Torr. As the 6-inch silicon wafer placed on the tablet, a wafer whose surface had been subjected to hydrophobicity-imparting treatment consisting of spin coating with a 5% isopropyl alcohol solution of hexamethyldisilazane and drying was used. The two silicon wafers were laminated in the same manner as in Example 1. The bond strength was 6.0 MPa (25°C), and it was a sufficient strength for annealing. A difference between the bond strength at 25°C and the bond strength at 203°C was 0.3 MPa.

Subsequently, the wafer laminate was subjected to annealing at 200°C for 1 hour in an oven. When the wafer laminate was handled for putting it in the oven or taking it out of the oven, the wafers did not peel off from each other.

### (Comparative Example 1)

Lamination between a glass substrate and a silicon wafer was carried out at 110°C in the same manner as in Example 1, except that instead of cholesterol, 3 g of a liquid wax (melting temperature: 90°C, melting temperature width: 35°C, melt viscosity: 50 mPa·s, "Sky Liquid KN Series" available from Nikka Seiko Co., Ltd.) was applied onto the wafer. The wax did not spread out between the wafer and the glass substrate only by the self-weight of the glass, so that a pressure of 0.5 kg/cm² was applied to bond them. The bond strength was 3.0 MPa, and a difference between the bond strength at 25°C and the bond strength at 70°C was 2.5 MPa.

Subsequently, the back surface of the 6-inch silicon wafer was subjected to grinding. After the grinding, however, it was found that the wafer and the glass substrate had deviated in the rotation direction of the grinding machine by about 0.2 mm probably because they were influenced by lowering of a bond strength accompanying generation of heat in the grinding operation. Then, an attempt to peel the wafer from the glass substrate was made in the same manner as in Example 1, but because of tackiness, the wafer could not be peeled only by heat, that is, the ground wafer could be peeled by directly applying to the wafer an external force, such as grasping of en edge of the ground wafer with tweezers. On this account, the limit of the thickness up to which the 6-inch silicon wafer could be ground was 200 µm, and when the wafer was ground to a thickness smaller than this, the wafer was broken by the peeling operation.

## Claims

1. A hot-melt adhesive composition containing as a main component a crystalline compound having a melting temperature of 50 to 300°C, said composition having a melting temperature width of not more than 30°C and having a melt viscosity of not more than 0.1 Pa·s at a melting temperature of the composition.

2. The hot-melt adhesive composition as claimed in claim 1, wherein the crystalline compound is an organic compound composed of elements of C, H and O only and having a molecular weight of not more than 1000.

3. The hot-melt adhesive composition as claimed in claim 1 or 2, wherein the total of an alkali metal ion content and a heavy metal ion content in the composition is not more than 100 ppm.

4. The hot-melt adhesive composition as claimed in any one of claims 1 to 3, wherein the crystalline compound is an aliphatic compound or an alicyclic compound.

5. The hot-melt adhesive composition as claimed in any one of claims 1 to 3, wherein the crystalline compound is a compound having a steroid skeleton and/or a hydroxyl group in a molecule or a derivative thereof (except an ester derivative).

6. The hot-melt adhesive composition as claimed in any one of claims 1 to 5, which contains a surface tension modifier.

7. The hot-melt adhesive composition as claimed in claim 6, wherein the surface tension modifier is at least one substance selected from the group consisting of fluorine-based surface active agents having a fluorinated alkyl group and polyether alkyl-based surface active agents having an oxyalkyl group.

8. The hot-melt adhesive composition as claimed in any one of claims 1 to 7, which has properties that a bond strength A (MPa) at a temperature of 25±2°C that is given when a wafer and a glass substrate are bonded using the composition and a bond strength B (MPa) at a temperature lower than the melting temperature of the composition by 20°C that is given when they are bonded using the composition satisfy the following relational expression (1):
0<A-B<0.5 (1)

9. The hot-melt adhesive composition as claimed in any one of claims 1 to 8, which is in the form of a tablet.

10. A hot-melt adhesive kit comprising the tablet hot-melt adhesive composition of claim 9, a surface treatment agent and a cleaning liquid.
